# EUROPÄISCHE PATENTSCHRIFT

(11) **EP 0 580 639 B1**
(45) Veröffentlichungstag und Bekanntmachung des Hinweises auf die Patenterteilung: **03.07.1996**
(21) Anmeldenummer: 92907678.4
(22) Anmeldetag: 03.04.1992
(51) Int. Cl.: B23B 31/12

(54) **SPANNFUTTER**
CHUCK
MANDRIN DE SERRAGE

(30) Priorität: 04.04.1991 DE 4110894
(43) Veröffentlichungstag der Anmeldung: 02.02.1994
(73) Patentinhaber: ZETTL GMBH CNC PRÄZISIONS- UND SONDERWERKZEUGE, D-87463 Dietmannsried (DE)
(72) Erfinder: KNOBL, Karl-Heinz, D-8941 Trunkelsberg (DE); SCHEUTHLE, Dieter, D-8960 Kempten (DE)
(74) Vertreter: Weickmann, Heinrich, Dipl.-Ing.
(86) Internationale Anmeldenummer: EP9200756
(87) Internationale Veröffentlichungsnummer: WO9217305

(56) Entgegenhaltungen:
- DE-A- 3 222 399
- DE-A- 3 305 733
- DE-A- 3 610 671
- DE-C- 497 662
- GB-A- 621 761

## Beschreibung

Die Erfindung betrifft ein Spannfutter, umfassend eine Grundkörpereinheit mit einer Achse, wobei diese Grundkörpereinheit zum Anbau an einer Spannfutteraufnahme, insbesondere einer Werkzeugmaschine, ausgebildet ist,
wobei weiter an der Grundkörpereinheit eine Spannbackeneinengungshülse zentriert angeordnet ist,
wobei weiter innerhalb der Spannbackeneinengungshülse axial bewegliche Spannbacken aufgenommen sind,
wobei weiter zur axialen Bewegung der Spannbacken in einer Spann- und in einer Löserichtung ein längs der Achse sich erstreckender Spindeltrieb vorgesehen ist, welcher mit den Spannbacken in axialer Mitnahmeverbindung steht, eine im wesentlichen radiale Bewegung der Spannbacken ihm gegenüber jedoch gestartet,
wobei weiter die Spannbacken mit radial äußeren Gleitflächen an der Innenseite der Spannbackeneinengungshülse auf Einengungsbahnen geführt sind, welche mit der Achse einen spitzen Winkel einschließen, derart, daß die Spannbacken bei einer Bewegung in Spannrichtung radial einwärts gesteuert werden,
wobei weiter innerhalb der Spannbackeneinengungshülse Spannbackenspreizmittel in Eingriff mit den Spannbacken vorgesehen sind, welche bei einer Bewegung in Löserichtung die Spannbacken nach radial auswärts steuern,
wobei weiter der Spindeltrieb einen an der Grundkörpereinheit axial abstützbaren Außengewindespindelkörper sowie einen mit den Spannbacken in spannkraftübertragender Verbindung und lösekraftübertragender Verbindung stehenden Innengewindehülsenkörper umfaßt,
wobei weiter der Innengewindehülsenkörper an einer ihn gegenüber der Grundkörpereinheit zentrierenden Innenumfangsfläche geführt ist,
und wobei der Außengewindespindelkörper an der Grundkörpereinheit unabhängig von dem Gewindeeingriff mit dem Innengewindehülsenkörper zusätzlich zentriert ist.

Ein solches Spannfutter ist aus der DE 36 10 671 A1 bekannt. Bei dieser bekannten Ausführungsform ragt das den Spannbacken zugekehrte Ende des Innengewindehülsenkörpers beim Einspannen eines Werkzeugschafts geringen Durchmessers weit in den Innenraum der Einengungshülse vor und ist dort führungs- und abstützungslos. Dies kann zu Verspannungen und damit zu Unwuchten führen. Ein anderes - in Bezug auf die vorliegende Erfindung jedoch nicht gattungsgemäßes - Ausführungsbeispiel der DE 36 10 671 A1 sieht einen Getriebemechanismus vor, der eine rasche Annäherung der Spannbacken an einen einzuspannenden Werkzeugschaft mit einem ersten Getriebeübersetzungsverhältnis ermöglicht und der nach Annäherung der Spannbacken eine Erhöhung der Spannkraft mit einem anderen Übersetzungsverhältnis gestattet.

Der Erfindung liegt die Aufgabe zugrunde, ein Höchstmaß an Unwuchtfreiheit und Leichtgängigkeit des Spindeltriebs zu erreichen.

Zur Lösung dieser Aufgabe wird bei einem Spannfutter der eingangs genannten Art erfindungsgemäß vorgeschlagen, daß die den Innengewindehülsenkörper zentrierende Innenumfangsfläche an einer Führungshülse hergestellt ist, welche im Bereich der Spannbackeneinengungshülse durch radiale Schlitze zu einem die Spannbackenspreizmittel bildenden Spreizkäfig für die Spannbacken ausgebildet ist und in einem anschließenden Bereich als ein mit einer äußeren Umfangsfläche an der Grundkörpereinheit zentrierter Hülsenfortsatz ausgebildet ist, welcher den Gewindeeingriffsbereich zwischen dem Außengewindespindelkörper und dem Innengewindehülsenkörper in axialer Richtung überlappt, und daß die den Innengewindehülsenkörper zentrierende Innenumfangsfläche sowohl im Bereich des Hülsenfortsatzes - in diesem Bereich den Gewindeeingriffsbereich zwischen dem Innengewindehülsenkörper und dem Außengewindespindlelkörper überlappend - als auch im Bereich des Spreizkäfigs an der Führungshülse derart vorgesehen ist, daß der Innengewindehülsenkörper in jeder Axialstellung zumindest an den beiden axial beabstandeten Endbereichen seiner Außenumfangsfläche an der ihn zentrierenden Innenumfangsfläche radial abgestützt ist.

Die Führungspräzision des Innengewindehülsenkörpers kann dabei noch dadurch verbessert werden, daß der Spreizkäfig mit einer konischen Außenumfangsfläche an einer konischen Innenumfangsfläche der Einengungshülse zentriert ist.

Um eine höchstpräzise Zentrierung des Spreizkäfigs an der konischen Innenumfangsfläche der Einengungshülse zu erreichen und unbeabsichtigte Verspannung des Spreizkäfigs zu vermeiden, kann vorgesehen sein, daß die Führungshülse insbesondere im Bereich einer Übergangsschulter zwischen dem Spreizkäfig und dem Hülsenfortsatz an einer Anschlagfläche der Grundkörpereinheit axial positioniert ist, daß die Einengungshülse an einer Anschlagfläche der Grundkörpereinheit axial positioniert ist oder/und daß die Einengungshülse an der Grundkörpereinheit durch eine Paarung aneinanderliegender Umfangsflächen zentriert ist.

Die radiale Abstützung des Innengewindehülsenkörpers in zwei endnahen Bereichen seiner Außenumfangsfläche an der ihn zentrierenden Innenumfangsfläche kann insbesondere dadurch erreicht werden, daß der Innengewindehülsenkörper in jeder Axialposition im wesentlichen auf seiner ganzen Länge an der ihm zentrierenden Innenumfangsfläche anliegt.

Das vorstehend behandelte Führungsprinzip für den Innengewindehülsenkörper läßt sich anwenden, wenn die Führungshülse mit der Einengungshülse zur gemeinsamen Drehung verbunden ist, wenn weiter die Einengungshülse drehbar, aber axial unverschiebbar an der Grundkörpereinheit gelagert ist, wenn weiter der Innengewindehülsenkörper über die Spannbacken zur gemeinsamen Drehung mit der Einengungshülse verbunden ist und wenn der Außengewindespindelkörper an der Grundkörpereinheit unverdrehbar festgelegt ist, wodurch sich ein insgesamt einfacher und kompakter mechanischer Aufbau ergibt. Es läßt sich aber auch dann anwenden, wenn die Einengungshülse unverdrehbar mit der Grundkörpereinheit verbunden ist, die Führungshülse unverdrehbar gegenüber der Grundkörpereinheit festgelegt ist, der Innengewindehülsenkörper über die Spannbacken unverdrehbar an der Führungsfülse festgelegt ist und der Außengewindespindelkörper drehbar in der Grundkörpereinheit gelagert und durch äußere Antriebsmittel antreibbar ist.

Bei der letztgenannten Ausführungsform ist es insbesondere möglich, daß die Antriebsmittel eine in der Grundkörpereinheit drehbar gelagerte, die Achse der Grundkörpereinheit kreuzende Schneckenwelle umfassen, welche mit einer Schneckenradverzahnung des Außengewindespindelkörpers in Eingriff steht und einen von außen zugänglichen Drehangriff besitzt.

Gemäß einer bevorzugten Weiterbildung der Erfindung wird vorgeschlagen, ein insbesondere über den Spindeltrieb auf die Spannbacken einwirkendes Spannkrafterhöhungsgetriebe vorzusehen, das zur Erhöhung einer von den Spannbacken auf ein einzuspannendes Teil auszuübenden Spannkraft betätigbar ist.

Der Spindeltrieb kann vorteilhafterweise als Spannbackenannäherungsgetriebe mit einem Übersetzungsverhältnis ausgebildet sein, das eine rasche Anpassung der Spannbackeneinstellung an unterschiedliche Werkzeugschaftdurchmesser gestattet. Nach einer entsprechenden Annäherung der Spannbacken an einen jeweiligen Werkzeugschaft kann dann das Spannkrafterhöhungsgetriebe zum Einsatz kommen, um bei Bedarf extrem hohe Spannkräfte auf den Werkzeugschaft ausüben zu können, wobei die Zentrierung des Innengewindehülsenkörpers bzw. des Außengewindespindelkörpers dafür sorgt, daß auch bei Aufbringung hoher Spannkräfte keine nennenswerten Unwuchten im Spindeltriebmechanismus auftreten können.

Das Spannkrafterhöhungsgetriebe kann als Keilgetriebe, Schneckengetriebe oder Kniehebelgetriebe vorzugsweise derart ausgebildet sein, daß es den Spindeltrieb in axialer Richtung beaufschlagt. Damit kann man den Spindelbetrieb so gestalten, daß mit wenigen Drehungen etwa an der Spannbackeneinengungshülse ein großer radialer Zustellweg durchlaufen werden kann, und daß andererseits mit geringem Bewegungsaufwand an dem Spannkrafterhöhungsgetriebe eine große Spannkraft angelegt werden kann.

Gemäß einer bevorzugten Ausführungsform ist das Spannkrafterhöhungsgetriebe als Exzentergetriebe ausgebildet. In diesem Zusammenhang wird insbesondere vorgeschlagen, daß die Führungshülse mit der Einengungshülse zur gemeinsamen Drehung verbunden ist, daß die Einengungshülse drehbar, aber axial unverschiebbar an der Grundkörpereinheit gelagert ist, daß der Innengewindehülsenkörper über die Spannbacken zur gemeinsamen Drehung mit der Einengungshülse verbunden ist und daß der Außengewindespindelkörper an der Grundkörpereinheit unverdrehbar festgelegt ist. Der Spindeltrieb bildet dann das durch Drehung der Einengungshülse betätigbare Spannbackenannäherungsgetriebe. Die an sich bei Handbohrmaschinen bekannte Möglichkeit der Spannbackenverstellung durch Verdrehung der Spannbackeneinengungshülse läßt sich bei den hier betrachteten Spannfuttern von Hochleistungswerkzeugmaschinen gerade deshalb anwenden, weil zusätzlich das Spannkrafterhöhungsgetriebe vorgesehen ist, die Drehbewegung an der Spannbackeneinengungshülse also nicht dazu dienen muß, die notwendigen Spannkräfte aufzubringen. Das als Spannkrafterhöhungsgetriebe vorgeschlagene Exzentergetriebe weist vorzugsweise eine im wesentlichen radial zu der Achse der Grundkörpereinheit in der Grundkörpereinheit gelagerte Exzenterwelle mit einem den Spindeltrieb in axialer Richtung beaufschlagenden Exzenterkörper. Eine bevorzugte Ausgestaltung sieht vor, daß der Exzenterkörper an dem von den Spannbacken entfernten Ende des Spindeltriebs an den Außengewindespindelkörper angreift.

Die Exzenterwelle kann mit Eingriffsflächen für den Eingriff eines Spannwerkzeugs, beispielsweise eines Sechskantschlüssels, ausgeführt sein. Die Exzenterwelle kann radial oder besser gesagt diametral durch die Grundkörpereinheit hindurchgeführt sein. Damit wird das Problem des Unwuchtausgleichs erheblich erleichtert, denn eine diametral durch die Grundkörpereinheit hindurchgeführte Exzenterwelle läßt sich mit geringen Unwuchten ausführen, insbesondere dann, wenn sich die Exzenterwelle über den Gesamtdurchmesser der Grundkörpereinheit erstreckt. In diesem Fall ist es keine Schwierigkeit, einen vollständigen Unwuchtausgleich zu erzielen. Hinzu kommt, daß durch die Drehung der radial oder diametral gelagerten Exzenterwelle praktisch keine Unwuchtveränderung herbeigeführt wird im Hinblick auf die ohnehin sehr geringe Exzentrizität, so daß die Unwuchtfreiheit unabhängig von der Stellung der Exzenterwelle gilt. Im übrigen ist es unschwer möglich, auch unter Betrachtung der vorhandenen Exzentrizität, einen vollständigen Unwuchtausgleich für den Arbeitsbetrieb dadurch zu erhalten, daß man den Unwuchtausgleich in der Spannstellung der Exzenterwelle wählt. Zur Erleichterung der Handhabung ist es möglich, daß die Exzenterwelle durch Vorspannmittel in eine nicht spannende Drehstellung vorgespannt ist. Die Fixierung der Exzenterwelle in der Spannstellung ergibt sich dann zwangsläufig durch das selbstsperrende Zusammenwirken des Exzenterkörpers mit den von ihm jeweils beaufschlagten Teilen des Spannbackenannäherungsgetriebes. Zur Erleichterung der Handhabung und zur Verhinderung eines Überspannens kann vorgesehen sein, daß die Exzenterwelle in ihrem Drehwinkel durch Anschlagmittel begrenzt ist.

Wenn ein Spannbackenannäherungsgetriebe und ein Spannkrafterhöhungsgetriebe vorgesehen sind, so läßt sich auch das Problem der Selbstlösung der Spannbacken bei Drehrichtungswechsel leicht dadurch lösen, daß das Spannbackenannäherungsgetriebe durch Spannen des Spannkrafterhöhungsgetriebe gesperrt wird. Für den bevorzugten Fall, daß das Spannbackenannäherungsgetriebe durch Verdrehung der Spannbackeneinengungshülse betätigt wird, ist es im Hinblick auf die Sperrung des Spannbackenannäherungsgetriebes durch Spannen des Spannkrafterhöhungsgetriebes vorteilhaft, wenn eine Axialsicherung der Spannbackeneinengungshülse bei axialer Belastung der Spannbackeneinengungshülse durch die Spannbacken in Folge der Einwirkung des Spannkrafterhöhungsgetriebes auf die Spannbacken als Drehbremse zwischen der Spannbackeneinengungshülse und der Grundkörpereinheit wirkt.

Wenngleich das Spannkrafterhöhungsgetriebe in den bevorzugten Ausführungen auf ein Spannbackenannäherungsgetriebe einwirkt, so ist diese Aufeinanderfolge von Spannkrafterhöhungsgetriebe und Spannbackenannäherungsgetriebe aber nicht zwingend. Es wäre grundsätzlich auch denkbar, die Reihenfolge zu wechseln, d. h., das Spannbackenannäherungsgetriebe an der Grundkörpereinheit unmittelbar abzustützen und das Spannkrafterhöhungsgetriebe zwischen das Spannbackenannäherungsgetriebe und die Spannbacken einzufügen.

Der Vollständigkeit halber sei noch auf folgende zweckmäßige Ausgestaltungen eines Spannfutters hingewiesen. Ein insbesondere einstückig mit dem Innengewindehülsenkörper ausgebildeter und von dem Spindeltrieb beaufschlagter Schubkraftausübungskörper ist mit Schubkraftausübungsflächen versehen, die Schubkraftaufnahmeflächen der Spannbacken gegenüberstehen und beaufschlagen, um die axiale Schubkraft des Spindeltriebs auf die Spannbacken zu übertragen. Vorteilhafterweise schließen die Schubkraftaufnahmeflächen der Spannbacken und die Schubkraftausübungsflächen des Schubkraftausübungskörpers - jeweils in einer achsenthaltenden Ebene betrachtet - mit der Achse einen spitzen Winkel ein, derart, daß bei Ausübung einer das Einspannen eines Schaftes durch die Spannbacken bewirkenden Schubkraft von dem Schubkraftausübungskörper auf die Spannbacken ein radial einwärts gerichteter Spannkraftbeitrag von den Spannkraftausübungsflächen auf die Schubkraftaufnahmeflächen übertragen wird. Durch diese Maßnahme wird erreicht, daß sich beim Einspannen eines Werkzeugschafts innerhalb der Spannbacken durch die Keilwirkung zwischen den Schubkraftausübungsflächen des Schubkraftausübungskörpers und den Schubkraftaufnahmeflächen der Spannbacken ein radial einwärts gerichteter Spannkraftbeitrag auf die Spannbacken ergibt. Durch diesen Spannkraftbeitrag kann die spannkraftmindernde Tendenz, welche als Folge der Reibungskräfte zwischen den Schubkraftausübungsflächen des Schubkraftausübungskörpers und den Schubkraftaufnahmeflächen der Spannbacken entsteht, ganz oder teilweise kompensiert werden, so daß je nach der Größe des von den Schubkraftausübungsflächen und den Schubkraftaufnahmeflächen mit der Achse eingeschlossenen spitzen Winkels das Profil des Kraftverlaufs in Achsrichtung der Werkzeugeinspannflächen der Spannbacken beliebig verändert werden kann. Hinzu kommt, daß durch die Keilwirkung zwischen den Schubkraftausübungsflächen des Schubkraftausübungskörpers einerseits und den Schubkraftaufnahmeflächen der Spannbacken andererseits auch das Übersetzungsverhältnis zwischen dem Krafteingriffspunkt der Getriebemittel einerseits und den Spannbacken andererseits variiert und insbesondere vergrößert werden kann im Sinne einer Vergrößerung der von den Spannbacken auf den Werkzeugschaft ausgeübten radialen Spannkräfte.

Eine besonders günstige Spannkraftverteilung an den Spannbacken ergibt sich dann, wenn - jeweils in einer achsenthaltenden Ebene betrachtet - die Schubkraftaufnahmeflächen und die Schubkraftausübungsflächen einerseits mit der jeweils zugehörigen Einengungsbahn andererseits einen Winkel von annähernd 90° einschließen.

Wie an sich z. B. aus der DE-30 48 274 A1 bekannt, können eine Schubkraftaufnahmefläche und eine zugehörige Schubkraftausübungsfläche Teilfächen von ineinandergreifenden Profilen sein, welche die jeweilige Spannbacke zur axialen Mitnahme mit dem Schubkraftausübungskörper in beiden Achsrichtungen verbinden. Durch diese Maßnahme wird erreicht, daß unabhängig von dem Betätigungssinn der Getriebemittel die Spannbacken jeweils von dem Schubkraftausübungskörper in axialer Richtung mitgenommen werden, insbesondere also auch dann, wenn der jeweilige Werkzeugschaft aus dem Spannfutter gelöst werden soll. Der konische Spreizkäfig stellt eine radiale Rückzugsbewegung der Spannbacken von dem Einspannteil bei entsprechender Axialbewegung des Schubkraftausübungskörpers sicher, so daß sich die Spannbacken bei Löseeinwirkung auf den Spindeltrieb oder ggf. das Spannkrafterhöhungsgetriebe selbsttätig von dem Schaft des jeweilig vorliegenden einzuspannenden Teils abheben.

Bei Ausführungsformen der Erfindung, die eine drehbar, aber axial unbeweglich auf der Grundkörpereinheit gelagerte Spannbackeneinengungshülse vorsehen, wird vorgeschlagen, daß die Spannbackeneinengungshülse mit einer Innenumfangsfläche auf einer Außenumfangsfläche der Grundkörpereinheit durch ein Nadellager drehbar und radial unbeweglich gelagert ist. Mit diesem Vorschlag läßt sich auf relativ einfache Weise die Gefahr des Auftretens von Unwuchten als Folge exzentrischer Lagerung der Spannbackeneinengungshülse unterdrücken. Man muß sich hierbei folgendes vergegenwärtigen: Wenn man die Spannbackeneinengungshülse drehbar auf der Grundkörpereinheit lagert, um durch mittelbare oder unmittelbare Dreheinwirkung auf die Spannbackeneinengungshülse die Spannbackenzustellung zu bewirken und/oder die Spannkrafterhöhung zu bewirken, so darf man die Passung der Spannbackeneinengungshülse auf der Grundkörpereinheit zur Vermeidung von Reibungswiderständen nicht beliebig eng fällen. Wenn aber, wie hier vorgeschlagen, ein Nadellager zwischen Spannbackeneinengungshülse und Grundkörpereinheit vorgesehen ist, so kann man ohne die Gefahr eines zu großen Reibungswiderstandes eine enge Passung der Nadellagerrollen zwischen den an ihnen anliegenden Flächen der Grundkörpereinheit und der Spannbackeneinengungshülse wählen und damit einen radialen Versatz der Spannbackeneinengungshülse mit der Folge von Unwucht vollständig vermeiden. Man braucht hierzu noch nicht einmal eine radiale Vorspannung der Nadeln zwischen den innen radial einwärts und radial auswärts anliegenden Flächen zu wählen. Es genügt, Nadeln zu verwenden, die besonders enge Toleranzen aufweisen und genau dem Ringspalt zwischen den an ihnen anliegenden Ringflächen der Spannbackeneinengungshülse und der Grundkörpereinheit entsprechen.

Wenn hier und im folgenden von einem Werkzeug mit einem Werkzeugschaft gesprochen wurde bzw. wird, so entspricht dies einem häufigen Anwendungsfall der erfindungsgemäßen Spannfutter. Es ist durchaus denkbar, daß in anderen Anwendungsfällen durch die Spannbacken nicht ein Werkzeugschaft eingespannt wird, sondern gelegentlich auch der Schaft eines durch ein stationäres Werkzeug zu bearbeitenden Werkstücks.

Die beiliegenden Figuren illustrieren die Erfindung anhand von Ausführungsbeispielen; es stellen dar:
- Figur 1: einen Längsschnitt durch eine erste Ausführungsform eines erfindungsgemäßen Spannfutters;
- Figur 2: einen Schnitt durch den Spreizkäfig nach Linie II-II der Figur 1;
- Fig. 3: eine Ansicht auf den Schubkraftausübungskörper in Pfeilrichtung III der Fig. 1;
- Fig. 4: ein Kräfteschema an den Spannbacken;
- Fig. 5: einen Exzenterkörper eines Spannkrafterhöhungsgetriebes;
- Fig. 6: einen von dem Exzenterkörper beaufschlagten Außengewindespindelkörper eines als Spindeltrieb ausgebildeten Spannbackenannäherungsgetriebes;
- Fig. 7: einen Längsschnitt entsprechend demjenigen der Fig. 1 bei einer abgewandelten Ausführungsform des Spannfutters und
- Fig. 8: einen Längsschnitt einer weiteren Ausführungsform.

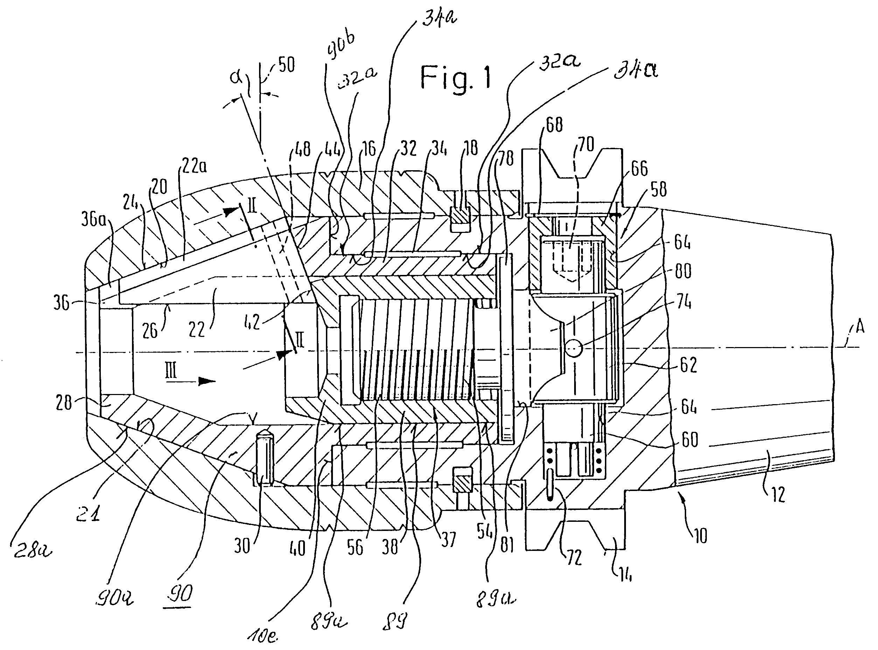

In Fig. 1 ist eine Grundkörpereinheit ganz allgemein mit 10 bezeichnet. Diese Grundkörpereinheit 10 umfaßt einen Anbauteil 12 in Form eines Außenkonus zum Einführen in einen Innenkonus einer rotierenden Spindel. An dem Außenkonus 12 ist ferner ein Flansch 14 angebracht, der eine Greiferrille aufweist. Das Spannen des Außekonus' erfolgt über eine im Innern der jeweiligen Spindel angeordnete Einzugsvorrichtung, die mit einem Anzugsbolzen am Ende des Außenkonus' zusammenwirkt. Die Greiferrille dient zum Greifen und Transportieren des Spannfutters mittels eines Handhabungsgeräts. Auf der Grundkörpereinheit 10 ist ferner eine Spannbackeneinengungshülse 16 drehbar gelagert und axial durch einen Sprengring 18 gesichert. Die Spannbackeneinengungshülse 16 hat einen im wesentlichen konischen Innenumfang,und im Bereich dieses konischen Innenumfangs sind Einengungsbahnen 20 ausgebildet, die in Achsrichtung A des Spannfutters konvergieren. An diesen Einengungsbahnen 20 sind Spannbacken 22 mit radial äußeren Gleitflächen 24 geführt. Durch Axialverschiebung der Spannbacken 22 in Achsrichtung A nach links können die Spannbacken 22 radial einwärts bewegt werden mit der Folge, daß ihre radial inneren Werkzeugeinspannflächen 26 auf einen nicht dargestellten Werkzeugschaft einwirken. Es sind mehrere, beispielsweise drei, Spannbacken über den Innenumfang der Spannbackeneinengungshülse 16 verteilt. Diese einzelenen Spannbacken sind in ihrer Verteilung um die Achse A durch einen Spreizkäfig 28 festgelegt. Der Spreizkäfig 28 ist axial und peripher unbeweglich an der Spannbackeneinengungshülse 16 durch einen Stift 30 festgelegt. Der Spreizkäfig 28 weist einen Hülsenfortsatz 32 auf, der in einer Bohrung 34 der Grundkörpereinheit 10 drehbar gelagert ist.

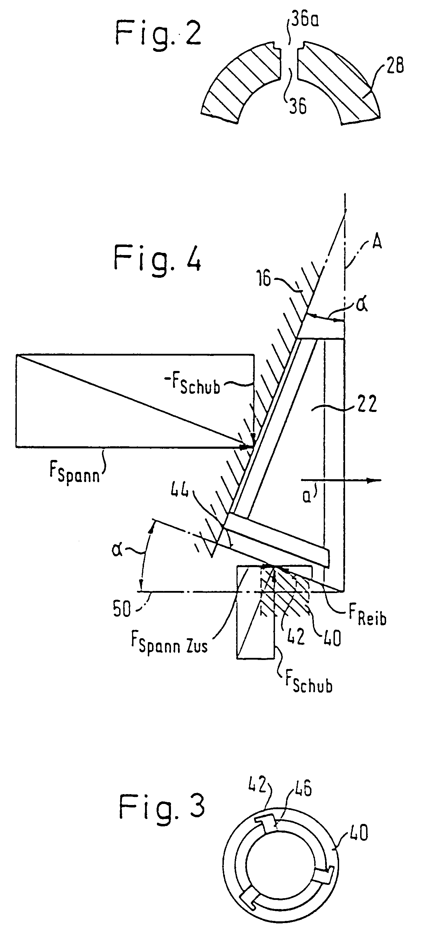

In Fig. 2 erkennt man einen Teilschnitt durch den Spreizkäfig 28. Der Spreizkäfig 28 weist Schlitze 36 auf, in denen die Spannbacken 22 geführt sind. Die Schlitze 36 sind an ihren radial äußeren Enden zu einer Führungsnut 36a erweitert. In diesen Führungsnuten 36a sind T-förmige Rückenbereiche 22a der Spannbacken 22 so geführt, daß die Anlage der radial äußeren Gleitflächen 24 der Spannbacken 22 an den Einengungsbahnen 20 ständig gewährleistet ist, unabhängig von der Stellung der Spannbacken 22 in Längsrichtung der Achse A. Innerhalb des Hülsenfortsatzes 32 ist ein Innengewindehülsenkörper 38 radial fest und axial verschiebbar gelagert. Dieser Innengewindehülsenkörper 38 ist an seinem in der Fig. 1 linken Ende mit einem Schubkraftausübungskörper 40 einstückig verbunden. Der Schubkraftausübungskörper 40 liegt, wie aus der oberen Hälfte der Fig. 1 zu ersehen, mit Schubkraftausübungsflächen 42 an Schubkraftaufnahmeflächen 44 der Spannbacken 22 an. Die Schubkraftausübungsflächen 42 sind, wie aus Fig. 3 ersichtlich, Bestandteil von L-förmigen Profilnuten 46 des Schubkraftausübungskörpers, und diese Profilnuten 46 nehmen Komplementärprofile 48 an den in Fig. 2 rechten Enden der Spannbacken 22 auf. Wichtig ist dabei, daß die Schubkraftausübungsflächen 42 des Schubkraftausübungskörpers 40 und die Schubkraftaufnahmeflächen 44 der Spannbacken 22 einen Winkeln α gegenüber einer zur Achse A orthogonalen Fläche 50 einschließen.

Wenn der Schubkraftausübungskörper 40 sich in Achsrichtung A nach links bewegt, so werden die Spannbacken 22 längs der Einengungsbahnen 20 ebenfalls nach links verschoben, wobei sich die Komplementärprofile 48 in den Profilnuten 46 im wesentlichen radial einwärts bewegen.

Wenn der Schubkraftausübungskörper 40 sich in Achsrichtung A nach rechts bewegt, so werden die Spannbacken 22 von dem Schubkraftausübungskörper 40 nach rechts mitgenommen, und zwar unter Vermittlung der Profilnuten 46 und der Komplementärprofile 48. Dabei bleiben die radial äußeren Gleitflächen 24 der Spannbacken 22 in Eingriff mit den Einengungsbahnen 20 dank der Führung der Rückenbereiche 22a in den Führungsnuten 36a. Dies bedeutet, daß die Spannbacken 22 bei einer Axialverschiebung nach rechts sich radial auswärts bewegen und mit ihren Werkzeugeinspannflächen 26 von dem Schaft des jeweiligen Werkzeugs abheben. Die radiale Auswärtsbewegung der Spannbacken 22 bedeutet, daß die L-förmigen Komplementärprofile 48 sich in den L-förmigen Profilnuten 46 ebenfalls im wesentlichen radial auswärts bewegen.

Die Axialbewegung des Schubkraftausübungskörpers 40 wird herbeigeführt durch einen Spindeltrieb 37. Zu diesem Spindeltrieb 37 gehört neben dem bereits erwähnten Innengewindehülsenkörper 38 ein Außengewindespindelkörper 54. Auf die Abstützung dieses Außengewindespindelkörpers 54 in der Grundkörpereinheit 10 wird später noch eingegangen.

Im Augenblick sei für die Erläuterung der Wirkung des Spindeltriebs angenommen, daß der Außengewindespindelkörper 54 innerhalb der Grundkörpereinheit 10 axial und radial festliegt und unverdrehbar ist. Der Außengewindespindelkörper 54 steht mit dem Innengewindehülsenkörper 38 über ein flachgängiges Linksgewinde 56 mit im Querschnitt rechteckigen Gewindegängen in Eingriff.

Bei einer Verdrehung der Spannbackeneinengungshülse wird der Spreizkäfig 28 mitgedreht, und damit werden auch die Spannbacken 22 über den Spreizkäfig 28 mitgedreht. Die Spannbacken 22 nehmen dabei aufgrund des Eingriffs der L-förmigen Komplementärprofile 48 in die L-förmigen Profilnuten 46 den Schubkraftausübungskörper 40 in Drehrichtung mit und damit auch den Innengewindehülsenkörper 38. Wird die Spannbackeneinengungshülse 16 im Uhrzeigersinn verdreht, so wird also auch der Innengewindehülsenkörper 38 gegenüber dem axial und in Umfangsrichtung feststehenden Außengewindespindelkörper 54 verdreht. Da das Gewinde 56 zwischen dem Innengewindehülsenkörper 38 und dem Außengewindespindelkörper 54 ein Linksgewinde ist, bedeutet dies, daß eine Verdrehung der Spannbackeneinengungshülse 16 und daher auch des Innengewindehülsenkörpers 38 im Uhrzeigersinn zu einer Axialbewegung des Innengewindehülsenkörpers 38 und damit auch des Schubkraftausübungskörpers 40 nach links führt mit der Folge, daß die Spannbacken 22 radial einwärts bewegt werden. Umkehrtes gilt für eine Drehbewegung der Spannbackeneinengungshülse im Gegenuhrzeigersinn. Durch Drehen der Spannbackeneinengungshülse kann also in einer für den Praktiker durchaus gewohnten und üblichen Weise - es sei erinnert an die Spannbacken von einfachen Handbohrmaschinen - die Annäherungsbewegung der Spannbacken 22 und die Rückzugsbewegung dieser Spannbacken 22 zu bzw. von dem jeweiligen Werkzeugschaft ausgeführt werden.

Das von Hand an der Spannbackeneinengungshülse 16 aufzubringende Drehmoment reicht aber nun nicht unter allen Umständen aus, um die notwendige radiale Einspannkraft zwischen den Spannbacken und dem jeweiligen Werkzeugschaft zu erzielen. Man kann zwar durch flachgängige Gestaltung des Gewindes 56 ein Übersetzungsverhältnis erzielen, das auch höhere radiale Spannkräfte zwischen den Spannbacken 22 und dem jeweiligen Werkzeugschaft zu erzielen gestattet. Man kann auch davon ausgehen, daß bei einer Drehung der jeweiligen Werkzeugmaschinenspindel im Uhrzeigersinn ein Selbstanzug des Gewindes 56 stattfindet mit dem Ergebnis einer Erhöhung der radialen Spannkraft zwischen den Spannbacken 22 und dem Werkzeugschaft. Man muß aber auch mit der Möglichkeit rechnen, daß sehr hohe Drehmomente von den Spannbacken 22 auf den Werkzeugschaft über-tragen werden müssen, und insbesondere auch mit der Möglichkeit, daß die Werkzeugmaschinenspindel gelegentlich auch von Rechts lauf auf Linkslauf umgestellt werden muß, so daß ein Selbstanzug, der in der einen Drehrichtung gewährleistet war, beim Umstellen der Drehrichtung nicht mehr besteht und durch eine Tendenz zur Lockerung ersetzt wird.

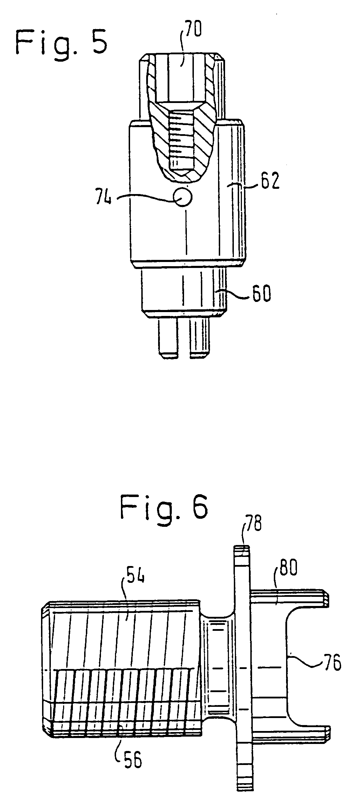

Um nun alle Spannkraftbedürfnisse auch bei wechselnder Drehrichtung erfüllen zu können, ist neben dem Gewindetrieb 37, der als ein Spannbackenannäherungsgetriebe verwendet werden kann, ein Spannkrafterhöhungsgetriebe vorgesehen, welches ganz allgemein mit 58 bezeichnet ist. Dieses Spannkrafterhöhungsgetriebe umfaßt eine Exzenterwelle 60 mit einem darauf angeordneten Exzenterkörper 62. Die Exzenterwelle 60 ist in einer gestuften Radialbohrung 64 der Grundkörpereinheit 10 drehbar gelagert. Im Hinblick auf den Ein- und Ausbau der Exzenterwelle 60 ist zu deren Lagerung im oberen Teil der Fig. 1 eine Lagerhülse 66 vorgesehen, die durch einen Sprengring 68 in der Grundkörpereinheit 10 axial festgelegt ist. Zur Ausbildung der Exzenterwelle 60 und des Exzenterkörpers 62 sei auch auf die Fig. 5 verwiesen. Man erkennt dort in dem einen Ende der Exzenterwelle 60 eine Sechskantausnehmung 70 zum Ansetzen eines Drehwerkzeugs. Die Exzenterwelle 60 ist durch eine Schenkelfeder 72 in einer ersten Drehrichtung vorgespannt, und zwar bis zum Zusammentreten eines Anschlagstifts 74 mit einem Gegenanschlag. Der Exzenterkörper 62 liegt an einer Pfanne 76 des Außengewindespindelkörpers 54 an. Wegen näherer Einzelheiten des Außengewindespindelkörpers 54 sei auch auf die Fig. 6 verwiesen. Der Außengewindespindelkörper weist einen radialen Flansch 78 auf, der, wie aus Fig. 1 ersichtlich, von dem rechten Ende des Hülsenfortsatzes 32 einen kleinen Abstand hat. Ferner weist der Außengewindespindelkörper 54 ein Formteil 80 auf, der in der Grundkörpereinheit 10 radial unbeweglich und unverdrehbar gelagert ist. Durch Drehen der Exzenterwelle 60 erreicht man, daß der Exzenterkörper 62 auf die Pfanne 76 einwirkt und der Außengewindespindelkörper 54 nach links verschoben wird. Der Exzenterkörper 62 kann mit sehr kleiner Exzentrizität ausgeführt werden, so daß man mit geringem Drehmoment an der Exzenterwelle 60 eine sehr große Schubkraft auf den Außengewindespindelkörper 54 ausüben kann und damit über den Innengewindehülsenkörper 38 und den Schubkraftausübungskörper 40 auf die Spannbacken 22. Die Schenkelfeder 72 spannt die Exzenterwelle 60 in eine erste entspannte Anschlagposition vor. Durch Drehen der Exzenterwelle 60 gelangt der Exzenterkörper 62 in seine Spannstellung, die wiederum als Anschlagposition des Anschlagstifts 74 vorgegeben sein kann, um ein Überspannen zu vermeiden.

In der Praxis wird man durch Drehen der Spannbackeneinengungshülse eine Annäherung der Spannbacken 22 bis zum Anschlag an den jeweiligen Werkzeugschaft durchführen und dann das Spannkrafterhöhungsgetriebe 58 zum Einsatz bringen, indem man die Exzenterwelle 60 mittels eines Sechskantschlüssels verdreht. Umgekehrt wird zur Lockerung eines Werkzeugs zunächst die Exzenterwelle 60 in ihre entspannte Stellung zurückgedreht und dann durch Betätigung der Spannbackeneinengungshülse 16 eine Abhebung der Spannbacken 22 von dem jeweiligen Werkzeugschaft bewirkt.

Mit dieser Konstruktion lassen sich so hohe Spannkräfte zwischen den Spannbacken 22 und dem jeweiligen Werkzeugschaft aufbringen, daß jeder Drehmomentanforderung Genüge getan wird, gleichgültig in welchem Drehsinn die Werkzeugspindel umläuft. Dabei ist auch noch zu beachten: Die Spannbackeneinengungshülse ist an der Grundkörpereinheit 10 in axialer Richtung nicht etwa durch ein Kugellager abgestützt, sondern durch den Sprengring 18. Wenn nun durch das Spannkrafterhöhungsgetriebe 58 eine große Kraft auf den Außengewindespindelkörper 54 ausgeübt wird, so wird die Spannbackeneinengungshülse 16 ebenfalls einer großen Kraft gegenüber der Grundkörpereinheit 10 ausgesetzt. Diese Kraft wird von der Spannbackeneinengungshülse 16 auf den Grundkörper 10 durch den Sprengring 18 übertragen. Der Sprengring 18 wirkt dann als eine Reibungsbremse zwischen der Spannbackeneinengungshülse 16 und der Grundkörpereinheit 10, so daß eine Verdrehung der Spannbackeneinengungshülse 16 bei entsprechender Drehrichtung auch durch diese Bremswirkung unterbunden ist.

Hinzuweisen ist auf die Schrägstellung der Schubkraftaufnahmeflächen 44 der Spannbacken 22 und der Schubkraftausübungsflächen 42 des Schubkraftausübungskörpers unter dem in Fig. 1 eingetragenen Winkel α. Durch diese Schrägstellung wird erreicht, daß auf den einzuspannenden Werkzeugschaft von den Spannbacken 22 in deren in Fig. 1 rechtem Endbereich eine vergrößerte Spannkraft ausgeübt werden kann.

Hierzu wird auf Fig. 4 verwiesen. Dort ist ein Spannbacken 22 erkennbar, und der schraffiert gezeichnete Teil ist als ein Teil des Schubkraftausübungskörpers 40 zu verstehen. Man erkennt wieder den Winkeln α gegenüber einer achsnormalen Fläche 50, d.h. den Winkel der Schubkraftaufnahmefläche 44 und der Schubkraftausübungsfläche 42 gegenüber der achsnormalen Fläche 50. Es wird nun angenommen, daß der Schubkraftausübungskörper 40 in Achsrichtung A eine Schubkraft F_{Schub} ausübt. Dieser Schubkraft F_{Schub} setzt die Spannbackeneinengungshülse 16 eine Reaktionskraft von der Größe -F_{Schub} entgegen. Durch Kraftzerlegung erhält man die Radialkraft F_{Spann}. Diese Radialkraft wird von den Spannbacken 22 auf den Werkzeugschaft ausgeübt. In der Fig. 4 ist die Spannkraft F_{Spann} an mittlerer Stelle der axialen Länge der Spannbacken 22 angedeutet. Diese Spannkraft F_{Spann} verteilt sich über die ganze axiale Länge der Spannbacken 22. Trotzdem ist die radiale Spannkraft der Spannbacken 22 gegen den Werkzeugschaft im Bereich der in Fig. 1 rechten und in Fig. 4 unteren Enden der Spannbacken 22 kleiner, als es einer gleichmäßigen Verteilung der Spannkraft F_{Spann} über die Länge der Spannbacken 22 entsprechen würde. Dies rührt daher, daß zwischen der Schubkraftaufnahmefläche 44 und der Schubkraftausübungsfläche 42 eine Reibkraft F_{Reib} wirksam ist. Diese Reibkraft F_{Reib} wirkt der Andrückung der Spannbacken 22 im Bereich von deren in Fig. 4 unteren Enden entgegen. Diese Reibkraft würde sich voll im Sinne einer Verminderung der Spannkraft an den unteren Enden der Spannbacken 22 in Fig. 4 auswirken, wenn der Winkel α O wäre, d.h. wenn die Spannkraftaufnahmefläche 44 und die Spannkraftausübungsfläche 42 orthogonal zur Achse A liegen würden, wie dies im Stand der Technik durchwegs der Fall ist. Bei der Gestaltung der Fig. 4 ergibt sich aber nun durch die endliche Größe des Winkels α ein Spannkraftbeitrag F_{SpannZus} (zusätzliche Spannkraft). Diese zusätzliche Spannkraft ergibt sich, wie aus Fig. 4 ersichtlich, durch eine Kraftzerlegung der Schubkraft F_{Schub} an den Flächen 44 und 42. Dieser Spannkraftbeitrag F_{SpannZus} wirkt der Reibkraft F_{Reib} entgegen, so daß trotz der unvermeidlichen Reibkraft F_{Reib} die Größe der von den Spannbacken 22 ausgeübten Spannkraft im unteren Teil der Spannbacken 22 gemäß Fig. 4 erhöht werden kann. Die Größe des Spannkraftbeitrags F_{SpannZus} läßt sich durch Wahl der Größe des Winkels α variieren. Auf diese Weise wird es möglich, einen gewünschten Spannkraftverlauf zwischen den Spannbacken 22 und dem jeweiligen Werkzeugschaft über die axiale Länge der Spannbacken 22 zu gewinnen. Mit der Pfeilrichtung a ist in Fig. 4 die Zustellrichtung der Spannbacken 22 zum Werkzeugschaft bezeichnet.

Man kann die endliche Bemessung des Winkels α auch so verstehen, daß im Anlagebereich der Flächen 42 und 44 eine zusätzliche Kraftübersetzung gewonnen wird im Vergleich zu einer Ausführungsform, bei der die Flächen 42 und 44 orthogonal zur Achse A angeordnet sind.

Zu dem Spannkrafterhöhungsgetriebe 58 ist noch folgendes zu sagen: Die Exzenterwelle 60 und der Exzenterkörper 62 verlaufen radial bzw. diametral durch die Grundkörpereinheit 10. Es ist ohne weiteres möglich, durch geeignete Bemessung der Bohrung 64 und der Exzenterwelle 60 eine vollständige Auswuchtung zu erreichen, insbesondere auch dadurch, daß man die Exzenterwelle 60 diametral durch die gesamte Grundkörpereinheit hindurchreichen läßt. Damit wird ein beruhigter Lauf erreicht. Dies ist ein wesentlicher Vorteil gegenüber bekannten Lösungen, bei denen die Getriebemittel zum Spannen der Spannbacken 22 von einem Schneckengetriebe mit einer tangential zur Achse A verlaufenden Schneckenwelle gebildet sind.

Von dem als Spannbackenannäherungsgetriebe wirksamen Spindeltrieb 37 sind beide Teile, also sowohl der Außengewindespindelkörper 54 als auch der Innengewindehülsenkörper 38, in der Grundkörpereinheit 10 radial unverrückbar gelagert. Die radiale Lagerung des Innengewindehülsenkörpers 38 erfolgt unter Vermittlung des Hülsenfortsatzes 32 in der Bohrnung 34 der Grundkörpereinheit 10.

Die radiale Lagerung des Außengewindespindelkörpers 54 in der Grundkörpereinheit 10 ist durch den Formteil 80 in einer Ausnehmung 81 gewährleistet. Dies bedeutet, daß beide Körper 38 und 54 unabhängig von ihrem Gewindeeingriff 56 jeweils für sich radial gelagert sind. Damit ist eine exakte Radiallage beider Körper 38 und 54 gewährleistet im Gegensatz zu bekannten Lösungen, bei denen von den beiden Körpern eines Spindeltriebs der eine zwar in der Grundkörpereinheit radial fest gelagert ist, der andere aber an dem erstgenannten nur unter Vermittlung des Gewindes radial festgelegt ist. Bei diesen bekannten Lösungen ist ein Radialversatz durchaus denkbar, denn die Gewinde müssen im Hinblick auf Leichtgängigkeit mit Gewindespiel ausgeführt werden. Dies ist ein weiterer Grund, weshalb sich die erfindungsgemäße Einrichtung von bekannten Spannfuttern vorteilhaft durch höhere Rundlaufgenauigkeit unterscheidet.

Vorteilhaft ist ferner, daß die Spannbacken 22 min dem Innengewindehülsenkörper verbunden sind, während der Außengewindespindelkörper unverdrehbar ist. Dadurch wird eine besonders einfache und kompakte Bauweise erreicht.

Nachzutragen ist hier auch noch, daß durch das in Fig. 1 rechte Ende des Hülsenfortsatzes 32 das Bewegungsspiel des Außengewindespindelkörpers 54 unter Vermittlung des Radialflansches 78 begrenzt ist.

Es ist weiter auf folgendes hinzuweisen:
Gemäß Figur 1 liegt der Innengewindehülsenkörper 38 mit einer Außenumfangsfläche 89 an einer Innenumfangsfläche 90a der aus dem Hülsenfortsatz 32 und dem Spreizkäfig 28 zusammengesetzten Führungshülse an, die als Gesamtheit mit 90 bezeichnet ist. Man erkennt, daß sich die Innenumfangsfläche 90a nach links weiter bis in den Spreizkäfig 28 hinein erstreckt, so daß der Innengewindehülsenkörper 38 auf seinem gesamten Verschiebeweg entlang der Achse A ständig an der Innenumfangsfläche 90a anliegt und dabei insbesondere auch in seinen Endbereichen 89a radial exakt abgestützt ist. Dabei ist die Führungshülse 90 im Bereich des Hülsenfortsatzes 32 durch Außenumfangsflächen 32a an entsprechenden Anlageflächen 34a der Bohrung 34 der Grundkörpereinheit radial abgestützt. Weiterhin liegt der Spreizkäfig 28 mit einer konischen Außenumfangsfläche 28a an der konischen Innenumfangsfläche 21 der Einengungshülse 16 an, dort wo der Spreizkäfig 28 nicht geschlitzt ist. Da die Führungshülse 90 mit einer Schulterfläche 90b an einer Endfläche 10e der Grundkörpereinheit 10 in axialer Richtung exakt festgelegt ist und da andererseits die Einengungshülse 16 durch den Sprengring 18 in axiler Richtung exakt festgelegt ist, besteht keine Gefahr einer Durchmessereinengung der Innenumfangsfläche 90a im Längsbereich der Schlitze 36.

Da auch der Außengewindespindelkörper 54 an der Ausnehmung 81 radial exakt festgelegt ist, ist eine hochpräzise radiale Festlegung des Spindeltriebs 37 gewährleistet unabhängig von dem Gewindeeingriff des Außengewindespindelkörpers 54 und des Innengewindehülsenkörpers 38. Dies gilt auf dem gesamten axialen Verschiebeweg des Innengewindehülsenkörpers 38. Dies ist von besonderer Bedeutung, weil der Innengewindehülsenkörper 38 beim Einspannen eines Werkzeugschafts hohen Druckkräften unterliegt und eine exzentrische Druckbelastung des Innengewindehülsenkörpers 38 durchaus auftreten kann.

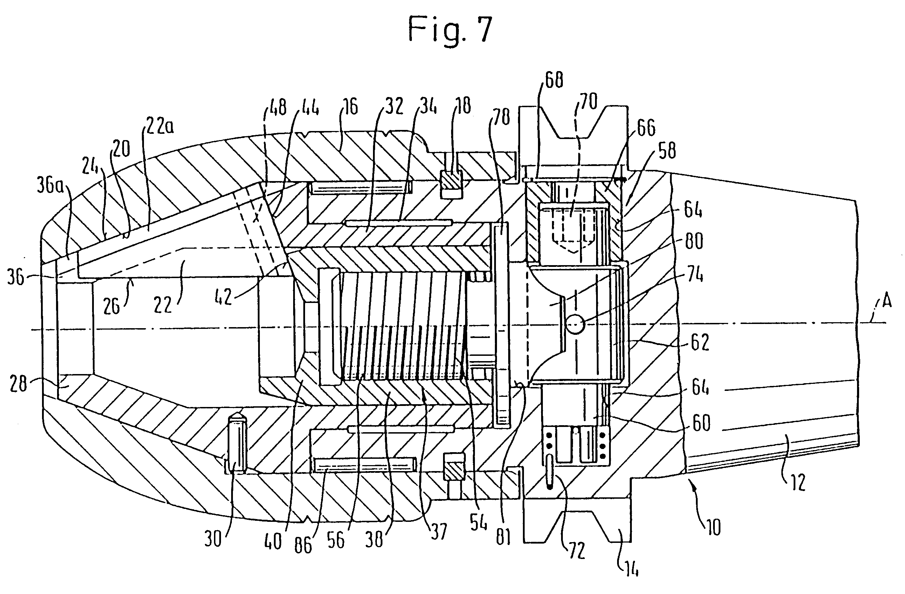

Ein weiteres Ausführungsbeispiel der Erfindung ist in Fig. 7 gezeigt. Diese Ausführungsform unterscheidet sich von derjenigen nach Fig. 1 nur dadurch, daß die Spannbackeneinengungshülse 16 auf der Grundkörpereinheit 10 mittels eines Nadellagers 86 drehbar gelagert ist. Die Nadeln 86 sind dabei sehr eng toleriert, so daß die Achslage der Spannbackeneinengungshülse gegenüber der Grundkörpereinheit äußerst genau ist. Sie kann wesentlich genauer sein als bei bekannten Lösungen, bei denen die Spannbackeneinengungshülse durch zylindrische Gleitflächen an der Grundkörpereinheit gelagert ist, weil solche zylindrischen Gleitflächen im Hinblick auf leichte Drehbarkeit immer so bemessen werden müssen, daß ein Radialspiel unvermeidlich ist. Auch dieses Radialspiel kann zu Unwuchten führen. Die Vermeidung solchen Radialspiels gemäß der Ausführungsform nach Fig. 7 ergibt wiederum einen Vorteil im Hinblick auf eine höhere Rundlaufgenauigkeit.

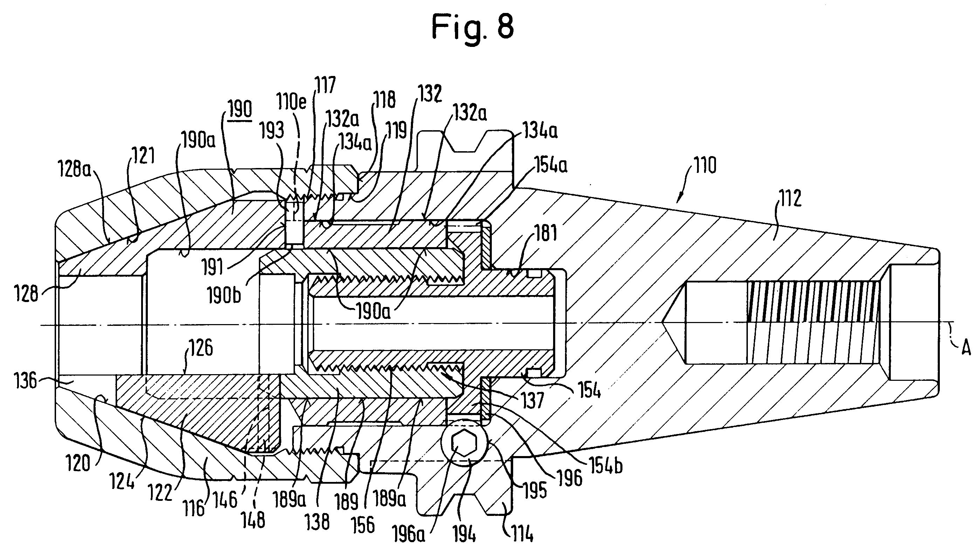

In Figur 8 ist eine weitere Ausführungsform dargestellt, wobei analoge Teile mit gleichen Bezugszeichen versehen sind wie in Figur 1, jeweils vermehrt um die Zahl 100. In der Ausführungsform nach Figur 8 ist die Einengungshülse 116 durch ein Gewinde 117 fest mit der Grundkörpereinheit 110 verschraubt, wobei die Einengungshülse 116 an der Stelle 118 in ihrer Axiallage durch den Eingriff ihrer nach rechts weisenden Endfläche mit einer Schulterfläche der Grundkörpereinheit 110 exakt festgelegt ist.

Weiterhin ist die Führungshülse 190 in einer Kontaktebene 110e an der Grundbaueinheit 110 durch achsnormale Ringflächen abgestützt. Ein Stift 193 ist radial in einer Bohrung 191 der Führungs-hülse 190 angeordnet und zwar so, daß die Achse des Stifts 193 in der Kontaktebene 110e liegt. Der radial äußere Abschnitt des Stifts 193 liegt deshalb einerseits in einer halbzylindrischen Fläche der Grundkörpereinheit 110 und andererseits in einer halbzylindrischen Fläche der Führungshülse 190, so daß die Führungshülse 190 gegenüber der Grundkörpereinheit 110 unverdrehbar festgelegt ist. Zur radialen Zentrierung der Einengungshülse 116 an der Grundkörpereinheit 110 ist diese durch eine Umfangsflächenpaarung 119 an der Grundkörpereinheit 110 in Achsflucht mit der Achse der Grundkörpereinheit 110 abgestützt.

Damit sind auch die in den Schlitzen 136 aufgenommenen Spannbacken 122 gegenüber der Grundkörpereinheit 110 unverdrehbar und somit ist über die radial verlaufenden Verbindungsprofile 146, 148 der Innengewindehülsenkörper 138 unverdrehbar. Er ist aber weiterhin zusammen mit den Spannbacken 122 axial verschiebbar, wobei im Falle einer Verschiebung des Außengewindekörpers nach links die Spannbacken radial einwärts gesteuert werden durch den Eingriff der Spannbacken mit den Einengungsbahnen 120 und bei einer Verschiebung des Innengewindehülsenkörpers 138 nach rechts die Spannbacken 122 radial auswärts gesteuert werden durch den Eingriff der Spannbacken 122 mit dem Spreizkäfig 128. Dieser Eingriff kann genauso gestaltet sein wie in Figur 2 dargestellt. Zu den Eingriffsprofilen 146,148 zählen auch eine Schubkraftausübungsfläche entsprechend der Schubkraftausübungsfläche 42 und eine Schubkraftaufnahmefläche entsprechend der Schubkraftaufnahmefläche 44 gemäß den Figuren 1 bis 4. Zu bemerken ist allerdings, daß die zur Achse spitzwinkelig geneigte Anordnung der Eingriffsprofile 146, 148, wie sie in der Ausführungsform nach den Figuren 1 bis 4 vorgesehen war, hier nicht angewandt ist, obwohl sie auch hier angewandt werden könnte. Die Eingriffsprofile 146,148 verlaufen hier vielmehr in einer im wesentlichen achsnormalen Ebene zur Achse A.

Der Innengewindehülsenkörper 138 kann also in Richtung der Achse A lediglich verschoben werden; er kann nicht gedreht werden. Seine Verschiebung erfolgt über das Gewinde 156 durch Verdrehen des Außengewindespindelkörpers 154. Der Außengewindespindelkörper 154 ist zu diesem Zweck mit einer Schneckenradverzahnung 154a versehen. Diese Schneckenradverzahnung 154a ist in Eingriff mit einer Schneckenwelle 194, welche in einer Bohrung 195 der Grundkörpereinheit 110 in ihrer Längsrichtung unbeweglich aufgenommen ist und einen von der Außenumfangsfläche der Grundkörpereinheit 110 zugänglichen Sechskantimbus 196a aufweist. Durch ein nicht dargestelltes Drehwerkzeug kann die Schneckenwelle 194 verdreht und damit auch der Außengewindespindelkörper verdreht werden, so daß der Innengewindehülsenkörper 138 ohne Drehung in Achsrichtung verstellbar ist, je nach Drehsinn der Schneckenwelle 194 entweder nach links, das heißt in Spannrichtung, oder nach rechts, das heißt in Löserichtung. Man erkennt, daß der Innengewindehülsenkörper 138 mit seinen endnahen Außenumfangsflächenbereichen 189a, auf seinem gesamten axialen Verschiebeweg durch die Innenumfangsfläche 190a der Führungshülse 190 radial abstützbar ist, auch wenn sich der linke Endbereich 189a innerhalb des Spreizkäfigs 128 befindet.

## Patentansprüche

1. Spannfutter, umfassend eine Grundkörpereinheit (10;110) mit einer Achse (A), wobei diese Grundkörpereinheit (10;110) zum Anbau an einer Spannfutteraufnahme, insbesondere einer Werkzeugmaschine, ausgebildet ist,
wobei weiter an der Grundkörpereinheit (10;110) eine Spannbackeneinengungshülse (16;116) zentriert angeordnet ist,
wobei weiter innerhalb der Spannbackeneinengungshülse (16;116) axial bewegliche Spannbacken (22;122) aufgenommen sind,
wobei weiter zur axialen Bewegung der Spannbacken (22,122) in einer Spann- und in einer Löserichtung ein längs der Achse sich erstreckender Spindeltrieb (37;137) vorgesehen ist, welcher mit den Spannbacken (22;122) in axialer Mitnahmeverbindung steht, eine im wesentlichen radiale Bewegung der Spannbacken (22;122) ihm gegenüber jedoch gestattet,
wobei weiter die Spannbacken (22;122) mit radial äußeren Gleitflächen (24;124) an der Innenseite der Spannbackeneinengungshülse (16;116) auf Einengungsbahnen (20;120) geführt sind, welche mit der Achse (A) einen spitzen Winkel einschließen derart, daß die Spannbacken (22;122) bei einer Bewegung in Spannrichtung radial einwärts gesteuert werden,
wobei weiter innerhalb der Spannbackeneinengungshülse (16;116) Spannbackenspreizmittel (28,36a;128) in Eingriff mit den Spannbacken (22;122) vorgesehen sind, welche bei einer Bewegung in Löserichtung die Spannbacken (22;122) nach radial auswärts steuern,
wobei weiter der Spindeltrieb (37;137) einen an der Grundkörpereinheit (10;110) axial abstützbaren Außengewindespindelkörper (54;154) sowie einen mit den Spannbacken (22;122) in spannkraftübertragender Verbindung (42,44) und lösekraftübertragender Verbindung (46,48;146,148) stehenden Innengewindehülsenkörper (38;138) umfaßt,
wobei weiter der Innengewindehülsenkörper (38;138) an einer ihn gegenüber der Grundkörpereinheit (10;110) zentrierenden Innenumfangsfläche (90a;190a) geführt ist,
und wobei der Außengewindespindelkörper (54;154) an der Grundkörpereinheit (10;110) unabhängig von dem Gewindeeingriff mit dem Innengewindehülsenkörper (38;138) zusätzlich zentriert ist,
**dadurch gekennzeichnet,**
daß die den Innengewindehülsenkörper (38;138) zentrierende Innenumfangsfläche (90a;190a) an einer Führungshülse (90;190) hergestellt ist, welche im Bereich der Spannbackeneinengungshülse (16;116) durch radiale Schlitze (36;136) zu einem die Spannbackenspreizmittel bildenden, Spreizkäfig (28;128) für die Spannbacken (22; 122) ausgebildet ist und in einem anschließenden Bereich als ein mit einer äußeren Umfangsfläche (32a;132a) an der Grundkörpereinheit (10;110) zentrierter Hülsenfortsatz (32;132) ausgebildet ist, welcher den Gewindeeingriffsbereich zwischen dem Außengewindespindelkörper (54;154) und dem Innengewindehülsenkörper (38;138) in axialer Richtung überlappt,
und daß die den Innengewindehülsenkörper (38;138) zentrierende Innenumfangsfläche (90a;190a) sowohl im Bereich des Hülsenfortsatzes (32;132) - in diesem Bereich den Gewindeeingriffsbereich zwischen dem Innengewindehülsenkörper (38;138) und dem Außengewindespindelkörper (54; 154) überlappend - als auch im Bereich des Spreizkäfigs (28;128) an der Führungshülse (90;190) derart vorgesehen ist, daß der Innengewindehülsenkörper (38;138) in jeder Axialstellung zumindest an den beiden axial beabstandeten Endbereichen (89a; 189a) seiner Außenumfangsfläche (89, 189) an der ihn zeintrierenden Innenumfangsfläche 90a; 190a) radial abgestützt ist.

2. Spannfutter nach Anspruch 1,
**dadurch gekennzeichnet,**
daß der Spreizkäfig (28;128) mit einer konischen Außenumfangsfläche (28a;128a) an einer konischen Innenumfangsfläche (21;121) der Einengungshülse (16;116) zentriert ist.

3. Spannfutter nach einem der Ansprüche 1 und 2,
**dadurch gekennzeichnet,**
daß die Führungshülse (90;190), insbesondere im Bereich einer Übergangsschulter (90b;110e) zwischen dem Spreizkäfig (28;128) und dem Hülsenfortsatz (32;132), an einer Anschlagfläche (10e;110e) der Grundkörpereinheit (10;110) axial positioniert ist.

4. Spannfutter nach einem der Ansprüche 1 bis 3,
**dadurch gekennzeichnet,**
daß die Einengungshülse (16;116) an einer Anschlagfläche (18;118) der Grundkörpereinheit (10;110) axial positioniert ist oder/und daß die Einengungshülse (16;116) an der Grundkörpereinheit (10;110) durch eine Paarung aneinanderliegender Umfangsflächen (bei 119) zeintriert ist.

5. Spannfutter nach einem der Ansprüche 1 bis 4,
**dadurch gekennzeichnet,**
daß der Innengewindehülsenkörper (38;138) in jeder Axialposition im wesentlichen auf seiner ganzen Länge an der ihn zentrierenden Innenumfangsfläche (90a;190a) anliegt.

6. Spannfutter nach einem der Ansprüche 1 bis 5,
**dadurch gekennzeichnet,**
daß die Führungshülse (90) mit der Einengungshülse (16) zur gemeinsamen Drehung verbunden ist (bei 30), daß die Einengungshülse (16) drehbar, aber axial unverschiebbar an der Grundkörpereinheit (10) gelagert ist, daß der Innengewindehülsenkörper (38) über die Spannbacken (22) zur gemeinsamen Drehung mit der Einengungshülse (16) verbunden ist und daß der Außengewindespindelkörper (54) an der Grundkörpereinheit (10) unverdrehbar festgelegt ist.

7. Spannfutter nach einem der Ansprüche 1 bis 5,
**dadurch gekennzeichnet,**
daß die Einengungshülse (116) unverdrehbar mit der Grundkörpereinheit (110) verbunden ist, daß die Führungshülse (190) unverdrehbar gegenüber der Grundkörpereinheit (110) festgelegt ist, daß der Innengewindehülsenkörper (138) über die Spannbacken (122) unverdrehbar an der Führungshülse (190) festgelegt ist und daß der Außengewindespindelkörper (154) drehbar in der Grundkörpereinheit (110) gelagert und durch äußere Antriebsmittel (194,196a) antreibbar ist.

8. Spannfutter nach Anspruch 7,
**dadurch gekennzeichnet,**
daß die Antriebsmittel (194,196a) eine in der Grundkörpereinheit (110) drehbar gelagerte, die Achse (A) der Grundkörpereinheit (110) kreuzende Schneckenwelle (194) umfaßt, welche mit einer Schneckenradverzahnung (154a) des Außengewindespindelkörpers (154) in Eingriff steht und einen von außen zugänglichen Drehangriff (196) besitzt.

9. Spannfutter nach einem der vorhergehenden Ansprüche, gekennzeichnet durch ein insbesondere über den Spindeltrieb (37) auf die Spannbacken (22) einwirkendes Spannkrafterhöhungsgetriebe (58), das zur Erhöhung einer von den Spannbacken (22) auf ein einzuspannendes Teil auszuübenden Spannkraft betätigbar ist.

10. Spannfutter nach Anspruch 9, dadurch gekennzeichnet, daß das Spannkrafterhöhungsgetriebe als Keilgetriebe ausgebildet ist.

11. Spannfutter nach Anspruch 9, dadurch gekennzeichnet, daß das Spannkrafterhöhungsgetriebe als Schneckengetriebe ausgebildet ist.

12. Spannfutter nach Anspruch 9, dadurch gekennzeichnet, daß das Spannkrafterhöhungsgetriebe als Kniehebelgetriebe ausgebildet ist.

13. Spannfutter nach Anspruch 9, dadurch gekennzeichnet, daß das Spannkrafterhöhungsgetriebe als Exzentergetriebe ausgebildet ist.

14. Spannfutter nach Anspruch 13, dadurch gekennzeichnet, daß das Exzentergetriebe eine im wesentlichen radial zu der Achse der Grundkörpereinheit (10) in der Grundkörpereinheit (10) gelagerte Exzenterwelle (60) mit einem den Spindeltrieb (37) in Axialrichtung beaufschlagenden Exzenterkörper (62) umfaßt.

15. Spannfutter nach Anspruch 14, dadurch gekennzeichnet, daß der Exzenterkörper (62) an dem von den Spannbacken (22) entfernten Ende des Spindeltriebs (37) an den Außengewindespindelkörper (54) angreift.

16. Spannfutter nach Anspruch 14 oder 15, dadurch gekennzeichnet, daß die Exzenterwelle (60) mit Eingriffsflachen (70) für den Eingriff eines Spannwerkzeugs ausgeführt ist.

17. Spannfutter nach wenigstens einem der Ansprüche 14 bis 16, dadurch gekennzeichnet, daß die Exzenterwelle (60) sich im wesentlichen über den Gesamtdurchmesser der Grundkörpereinheit (10) erstreckt.

18. Spannfutter nach wenigstens einem der Ansprüche 14 bis 17, dadurch gekennzeichnet, daß die Exzenterwelle (60) durch Vorspannmittel (70) in eine nichtspannende Drehstellung vorgespannt ist.

19. Spannfutter nach wenigstens einem der Ansprüche 14 bis 18, dadurch gekennzeichnet, daß die Exzenterwelle (60) in ihrem Drehwinkel durch Anschlagmittel (74) begrenzt ist.

20. Spannfutter nach wenigstens einem der Ansprüche 9 bis 19, dadurch gekennzeichnet, daß die Betätigung des Spindeltriebes (37) durch spannen des Spannkrafterhöhungsgetriebes (58) sperrbar ist.

21. Spannfutter nach Anspruch 20, dadurch gekennzeichnet, daß bei Betätigbarkeit des Spindeltriebs (37) durch Verdrehen der Spannbackeneinengungshülse (16) die Spannbackeneinengungshülse (16) durch eine Axialsicherung (18) in axialer Richtung festgelegt ist und daß diese Axialsicherung (18) bei axialer Belastung der Spannbackeneinengungshülse (16) durch die Spannbacken (22) in Folge Einwirkung des Spannkrafterhöhungsgetriebes (58) auf die Spannbacken (22) als Drehbremse zwischen der Spannbackeneinengungshülse (16) und der Grundkörpereinheit (10) wirksam wird.

## Claims

1. A chuck, comprising a base unit (10;110) having an axis (A), wherein this base unit (10;110) is designed to be mounted on a chuck mounting, in particular a machine tool,
wherein a clamping jaw convergence sleeve (16;116) is also arranged centered on the base unit (10;110), wherein axially movable clamping jaws (22;122) are also accommodated within the clamping jaw convergence sleeve (16;116),
wherein for axial movement of the clamping jaws (22;122) in a clamping direction and in a release direction a spindle drive (37;137) extending along the axis is also provided,
which is in axial drive connection with the clamping jaws (22;122) but allows substantially radial movement of the clamping jaws (22;122) with respect thereto,
wherein the clamping jaws (22;122) are also guided by radially outer slide surfaces (24;124) along the inside of the clamping jaw convergence sleeve (16;116) on convergence tracks (20;120) which form with the axis (A) an acute angle so that with movement in clamping direction the clamping jaws (22;122) are directed radially inwards,
wherein within the clamping jaw convergence sleeve (16;116) there also are provided clamping jaw expanding means (28,36a;128) in engagement with the clamping jaws (22;122),
which upon movement in release direction direct the clamping jaws (22;122) radially outwards,
wherein the spindle drive (37;137) further comprises an externally threaded spindle body (54;154), which can bear axially against the base unit (10;110), and also an internally threaded sleeve body (38;138) which has a connection (42,44) with the clamping jaws (22;122) in a manner transmitting clamping force and a connection (46,48;146,148) in a manner transmitting release force,
wherein the internally threaded sleeve body (38;138) is also guided on an inner circumferential surface (90a;190a) centering it with respect to the base unit (10;110),
and wherein the externally threaded spindle body (54;154),
is additionally centered on the base unit (10;110) independently of the thread engagement with the internally threaded sleeve body (38;138), characterised in that the inner circumferential surface (90a;190a) centering the internally threaded sleeve body (38;138) is provided on a guide sleeve (90;190) which in the region of the clamping jaw convergence sleeve (16;116) is formed by radial slots (36;136) towards an expanding cage (28;128) for the clamping jaws (22;122) forming the clamping jaws expanding means and in an adjacent region is formed as a sleeve extension (32;132) centered on the base unit (10;110) with an outer circumferential surface (32a;132a), which sleeve extension overlaps in axial direction the thread engagement zone between the externally threaded spindle body (54;154) and the internally threaded sleeve body (38;138),
and in that the inner circumferential surface (90a;190a) centering the internally threaded sleeve body (38;138) is provided both in the region of the sleeve extension (32;132) - in this region overlapping the thread engagement zone between the internally threaded sleeve body (38;138) and the externally threaded spindle body (54;154) - and in the region of the expanding cage (28;128) on the guide sleeve (90;190) in such a way that in any axial position the internally threaded sleeve body (38;138) is radially braced at least in the two axially spaced apart end zones (89a;189a) of its outer circumferential surface (89,189) against the inner circumferential surface (90a;190a) centering it.

2. A chuck according to Claim 1, characterised in that the expanding cage (28;128) with a conical outer circumferential surface (28a;128a) is centered on a conical inner circumferential surface (21;121) of the convergence sleeve (16;116).

3. A chuck according to either claim 1 or claim 2, characterised in that the guide sleeve (90;190), in particular in the region of a transition shoulder (90b;110e), is axially positioned between the expanding cage (28;128) and the sleeve extension (32;132) against an abutment surface (10e;110e) of the base unit (10;110).

4. A chuck according to any one of Claims 1 to 3, characterised in that the convergence sleeve (16;116) is axially positioned against an abutment surface (18;118) of the base unit (10;110) or/and in that the convergence sleeve (16;116) is centered on the base unit (10;110) by mating of adjoining circumferential surfaces (at 119).

5. A chuck according to any one of Claims 1 to 4, characterised in that in any axial position and substantially over its entire length the internally threaded sleeve body (38;138) adjoins the inner circumferential surface (90a;190a) centering it.

6. A chuck according to any one of Claims 1 to 5, characterised in that the guide sleeve (90) is connected with the convergence sleeve (16) for common rotation (at 30), in that the convergence sleeve (16) is mounted so as to be rotatable but not axially displaceable on the base unit (10), in that the internally threaded sleeve body (38) is connected via the clamping jaws (22) for common rotation with the convergence sleeve (16), and in that the outer threaded spindle body (54) is located non-rotatably on the base unit (10).

7. A chuck according to any one of Claims 1 to 5, characterised in that the convergence sleeve (116) is connected non-rotatably with the base unit (110), in that the guide sleeve (190) is located non-rotatably with respect to the base unit (110), in that the internally threaded sleeve body (138) is located non-rotatably on the guide sleeve (190) via the clamping jaws (122), and in that the externally threaded spindle body (154) is mounted rotatably in the base unit (110) and can be driven by external drive means (194,196a).

8. A chuck according to Claim 7, characterised in that the drive means (194,196a) comprises a worm shaft (194) which is mounted rotatably in the base unit (110) and intersects the axis (A) of the base unit (110), which is in engagement with a worm gear toothing (154a) of the externally threaded spindle body (154) and which has a rotary engagement means (196) accessible from the outside.

9. A chuck according to any one of the preceding Claims, characterised by a clamping-force increasing mechanism (58) which acts on the clamping jaws (22) in particular via the spindle drive (37) and which can be actuated to increase a clamping force exerted by the clamping jaws (22) on a component to be clamped.

10. A chuck according to Claim 9, characterised in that the clamping-force increasing mechanism is in the form of a wedge mechanism.

11. A chuck according to Claim 9, characterised in that the clamping-force increasing mechanism is in the form of a worm gear.

12. A chuck according to Claim 9, characterised in that the clamping-force increasing mechanism is in the form of a toggle lever mechanism.

13. A chuck according to Claim 9, characterised in that the clamping-force increasing mechanism is in the form of an eccentric mechanism.

14. A chuck according to Claim 13, characterised in that the eccentric mechanism comprises a camshaft (60) mounted in the base unit (10) substantially radially to the axis of the base unit (10) with a cam body (62) acting on the spindle drive (37) in axial direction.

15. A chuck according to Claim 14, characterised in that the cam body (62) engages on the externally threaded spindle body (54) at the end of the spindle drive (37) remote from the clamping jaws (22).

16. A chuck according to Claim 14 or 15, characterised in that the camshaft (60) is formed with engagement surfaces (70) for the engagement of a clamping tool.

17. A chuck according to at least one of Claims 14 to 16, characterised in that the camshaft (60) extends essentially over the entire diameter of the base unit (10).

18. A chuck according to at least one of Claims 14 to 17, characterised in that the camshaft (60) is preloaded by preloading means (70) in a non-clamping angular position.

19. A chuck according to at least one of Claims 14 to 18, characterised in that the camshaft (60) is limited in its angle of rotation by stop means (74).

20. A chuck according to at least one of Claims 9 to 19, characterised in that the actuation of the spindle drive (37) can be stopped by tightening the clamping-force increasing mechanism (58).

21. A chuck according to Claim 20, characterised in that if the spindle drive (37) can be actuated by rotating the clamping jaw convergence sleeve (16) the clamping jaw convergence sleeve (16) is located in axial direction by an axial locking means (18), and in that upon axial loading of the clamping jaw convergence sleeve (16) by the clamping jaws (22) as a result of the action of the clamping-force increasing mechanism (58) on the clamping jaws (22) this axial locking means (18) acts as a rotary brake between the clamping jaw convergence sleeve (16) and the base unit (10).

## Revendications

1. Mandrin de serrage, comprenant une unité de corps de base (10 ; 110) avec un axe (A), dans lequel cette unité de corps de base (10 ; 110) est conformée pour être montée sur un récepteur de mandrin de serrage, en particulier d'une machine-outil,
dans lequel en outre un manchon de rétrécissement de mâchoires de serrage (16 ; 116) est centré sur l'unité de corps de base (10 ; 110),
dans lequel en outre des mâchoires de serrage (22 ; 122) axialement mobiles sont logées à l'intérieur du manchon de rétrécissement des mâchoires de serrage (16 ; 116),
dans lequel en outre pour le déplacement axial des mâchoires de serrage (22 ; 122), il est prévu, dans un sens de serrage et dans un sens de desserrage, un mécanisme à broche (37 ; 137), s'étendant le long de l'axe, qui est en liaison d'entraînement axial avec les mâchoires de serrage (22 ; 122), mais autorise un déplacement sensiblement radial des mâchoires de serrage (22 ; 122) par rapport à lui,
dans lequel en outre les mâchoires de serrage (22 ; 122) sont guidées avec des surfaces de glissement (24 ; 124) radialement extérieures, sur le côté intérieur du manchon de rétrécissement des mâchoires de serrage (16 ; 116), sur des voies de rétrécissement (20 ; 120), qui forment avec l'axe (A) un angle aigu de manière que les mâchoires de serrage (22 ; 122) sont commandées radialement vers l'intérieur dans un déplacement dans le sens de serrage,
dans lequel en outre, à l'intérieur du manchon de rétrécissement des mâchoires de serrage (16 ; 116) sont prévus des moyens d'écartement des mâchoires de serrage (28, 36a ; 128) en prise avec les mâchoires de serrage (22 ; 122), qui, lors d'un déplacement dans le sens du desserrage, commandent les mâchoires de serrage (22 ; 122) radialement vers l'extérieur,
dans lequel en outre le mécanisme à broche (37 ; 137) comporte un corps de broche à filetage extérieur (54 ; 154) pouvant s'appuyer axialement contre l'unité de corps de base (10 ; 110), ainsi qu'un corps de manchon à filetage intérieur qui est en liaison de transmission des forces de serrage (42, 44) et en liaison de transmission des forces de desserrage (46, 48 ; 146, 148), avec les mâchoires de serrage (22 ; 122),
dans lequel en outre le corps de manchon à filetage intérieur (38 ; 138) est guidé sur une surface périphérique intérieure (90a ; 190a) le centrant par rapport à l'unité de corps de base (10 ; 110),
et dans lequel le corps de broche à filetage extérieur (54 ; 154) est centré en supplément sur l'unité de corps de base (10 ; 110), indépendamment de la liaison filetée avec le corps de manchon à filetage intérieur (38 ; 138),
caractérisé
en ce que la surface périphérique intérieure (90a ; 190a), centrant le corps de manchon à filetage intérieur (38 ; 138), est réalisée sur un manchon de guidage (90 ; 190), qui, dans la zone du manchon de rétrécissement de mâchoire de serrage (16 ; 116), est conformé par des fentes radiales (36 ; 136), en une cage d'écartement (28 ; 128), formant les moyens d'écartement des mâchoires de serrage pour les mâchoires de serrage (22 ; 122) et, dans une zone adjacente, est conformé en un prolongement de manchon avec une surface périphérique extérieure (32a ; 132a), centré sur l'unité de corps de base (10 ; 110), lequel recouvre axialement la zone de liaison filetée entre le corps de broche à filetage extérieur (54 ; 154) et le corps de manchon à filetage intérieur (38 ; 138), et en ce que la surface périphérique intérieure (90a ; 190a), centrant le corps de manchon à filetage intérieur (38 ; 138), est prévue tant dans la zone du prolongement de manchon (32 ; 132) - recouvrant dans cette zone la zone de liaison filetée entre le corps de manchon à filetage intérieur (38 ; 138) et le corps de broche à filetage extérieur (54 ; 154) - ainsi que dans la zone de la cage d'écartement (28 ; 128) sur le manchon de guidage (90 ; 190), de manière que le corps de manchon à filetage intérieur (38 ; 138) est soutenu radialement dans toute position axiale, au moins aux deux zones d'extrémité (89a ; 189a), espacées axialement, de sa surface périphérique extérieure (89, 189), contre la surface périphérique intérieure (90a ; 190a) le centrant.

2. Mandrin de serrage selon la revendication 1,
caractérisé
en ce que la cage d'écartement (28 ; 128) est centrée avec une surface périphérique extérieure (28a ; 128a) conique sur une surface périphérique intérieure (21 ; 121) conique du manchon de rétrécissement (16 ; 116).

3. Mandrin de serrage selon l'une des revendications 1 et 2,
caractérisé
en ce que le manchon de guidage (90 ; 190), en particulier dans la zone d'un épaulement de transition (90 ; 110e), entre la cage d'écartement (28 ; 128) et le prolongement de manchon (32 ; 132), est axialement positionné sur une surface de butée (10e ; 110e) de l'unité de corps de base (10 ; 110).

4. Mandrin de serrage selon l'une des revendications 1 à 3,
caractérisé
en ce que le manchon de rétrécissement (16 ; 116) est positionné axialement contre une surface de butée (18 ; 118) de l'unité de corps de base (10 ; 110) ou/et en ce que le manchon de rétrécissement (16 ; 116) est centré sur l'unité de corps de base (10 ; 110) par un appariement de surfaces périphériques (en 119) s'appliquant l'une contre l'autre.

5. Mandrin de serrage selon l'une des revendications 1 à 4,
caractérisé
en ce que le corps de manchon à filetage intérieur (38 ; 138) s'applique dans chaque position axiale sensiblement sur toute sa longueur, contre la surface périphérique intérieure (90a ; 190a) le centrant.

6. Mandrin de serrage selon l'une des revendications 1 à 5,
caractérisé
en ce que le manchon de guidage (90) est relié (en 30) au manchon de rétrécissement (16), pour la rotation commune, en ce que le manchon de rétrécissement (16) est monté tournant, mais non coulissant axialement sur l'unité de corps de base (10), en ce que le corps de manchon à filetage intérieur (38) est relié, par les mâchoires de serrage (22), pour la rotation commune, avec le manchon de rétrécissement (16) et en ce que le corps de broche à filetage extérieur (54) est fixé non tournant sur l'unité de corps de base (10).

7. Mandrin de serrage selon l'une des revendications 1 à 5,
caractérisé
en ce que le manchon de rétrécissement (116) est relié de manière à ne pouvoir tourner avec l'unité de corps de base (110), en ce que le manchon de guidage (190) est fixé de manière à ne pouvoir tourner par rapport à l'unité de corps de base (110), en ce que le corps de manchon à filetage intérieur (138) est fixé, par l'intermédiaire des mâchoires de serrage (122), de manière à ne pouvoir tourner, sur le manchon de guidage (190) et en ce que le corps de broche à filetage extérieur (154) est monté tournant dans l'unité de corps de base (110) et peut être entraîné par des moyens d'entraînement (194, 196a) extérieurs.

8. Mandrin de serrage selon la revendication 7,
caractérisé
en ce que les moyens d'entraînement (194, 196a) comprennent un arbre de vis sans fin (194) monté tournant dans l'unité de corps de base (110), croisant l'axe (A) de l'unité de corps de base (110), lequel est en prise avec une denture de roue de vis sans fin (154a) du corps de broche à filetage extérieur (154) et possède une attaque de rotation (196), accessible de l'extérieur.

9. Mandrin de serrage selon l'une des revendications précédentes, caractérisé par un mécanisme d'augmentation de la force de serrage (58), agissant en particulier par le mécanisme à broche (37) sur les mâchoires de serrage (22), qui est actionnable pour augmenter une force de serrage a exercer par les mâchoires de serrage (22) sur une pièce à serrer.

10. Mandrin de serrage selon la revendication 9,
caractérisé en ce que le mécanisme d'augmentation de la force de serrage est conformé en mécanisme à coins.

11. Mandrin de serrage selon la revendication 9, caractérisé en ce que le mécanisme d'augmentation de la force de serrage est conformé en engrenage à vis sans fin.

12. Mandrin de serrage selon la revendication 9,
caractérisé en ce que le mécanisme d'augmentation de la force de serrage est conformé en mécanisme à levier coudé.

13. Mandrin de serrage selon la revendication 9,
caractérisé en ce que le mécanisme d'augmentation de la force de serrage est conformé en mécanisme à excentrique.

14. Mandrin de serrage selon la revendication 13,
caractérisé en ce que le mécanisme à excentrique comporte un arbre d'excentrique (60) monté sensiblement radialement par rapport à l'axe de l'unité de corps de base (10), dans l'unité de corps de base (10), avec un corps d'excentrique (62) sollicitant le mécanisme à broche (37) dans la direction axiale.

15. Mandrin de serrage selon la revendication 14,
caractérisé en ce que le corps d'excentrique (62) agit à l'extrémité éloignée des mâchoires de serrage (22), du mécanisme à broche (37), sur le corps de broche à filetage extérieur (54).

16. Mandrin de serrage selon la revendication 14 ou 15,
caractérisé en ce que l'arbre d'excentrique (60) présente des surfaces d'engagement (70) pour l'engagement d'un outil de serrage.

17. Mandrin de serrage selon l'une au moins des revendications 14 à 16, caractérisé en ce que l'arbre d'excentrique (60) s'étend sensiblement sur la totalité du diamètre de l'unité de corps de base (10).

18. Mandrin de serrage selon l'une au moins des revendications 14 à 17, caractérisé en ce que l'arbre d'excentrique (60) est précontraint par des moyens de précontrainte (70) dans une position de rotation n'opérant pas le serrage.

19. Mandrin de serrage selon l'une au moins des revendications 14 à 18, caractérisé en ce que l'arbre d'excentrique (60) est limité dans son angle de rotation par des moyens de butée (74).

20. Mandrin de serrage selon l'une au moins des revendications 9 à 19, caractérisé en ce que l'actionnement du mécanisme à broche (37) peut être bloqué par serrage du mécanisme d'augmentation de la force de serrage (58).

21. Mandrin de serrage selon la revendication 20, caractérisé en ce que dans le cas où le mécanisme à broche (37) est actionnable par rotation du manchon de rétrécissement des mâchoires de serrage (16), le manchon de rétrécissement des mâchoires de serrage (16) est fixé axialement par un blocage axial (18) et en ce que, dans le cas où le manchon de rétrécissement de mâchoire de serrage (16) est sollicité axialement par les mâchoires de serrage (22), par suite d'une action du mécanisme d'augmentation de la force de serrage (58) sur les mâchoires de serrage (22), ce blocage axial (18) agit comme frein de rotation entre le manchon de rétrécissement des mâchoires de serrage (16) et l'unité de corps de base (10).
